## Europäisches Patentamt
## European Patent Office
## Office européen des brevets

(19)

(11) Veröffentlichungsnummer: **0 003 025**
**B1**

(12) # EUROPÄISCHE PATENTSCHRIFT

(45) Veröffentlichungstag der Patentschrift:
**18.04.84**

(51) Int. Cl.³: **B 66 C 13/48, G 05 D 3/14,**
**B 63 B 27/10**

(21) Anmeldenummer: **78101601.9**

(22) Anmeldetag: **07.12.78**

(54) **Regelung für Drehwerks- oder Hubwerksantriebe eines Krans.**

(30) Priorität: **08.12.77 DE 2754698**
**30.11.78 DE 2851889**

(43) Veröffentlichungstag der Anmeldung:
**25.07.79 Patentblatt 79/15**

(45) Bekanntmachung des Hinweises auf die Patenterteilung:
**18.04.84 Patentblatt 84/16**

(84) Benannte Vertragsstaaten:
**FR GB SE**

(56) Entgegenhaltungen:
**DE - A - 2 330 054**
**DE - A - 2 345 280**
**DE - A - 2 653 951**
**DE - B - 1 961 345**
**DE - C - 1 065 152**
**DE - C - 1 135 148**
**FR - A - 2 065 598**

(73) Patentinhaber: **SIEMENS AKTIENGESELLSCHAFT,**
**Berlin und München Wittelsbacherplatz 2,**
**D-8000 München 2 (DE)**
Patentinhaber: **O & K, Orenstein & Koppel**
**Aktiengesellschaft Werk Lübeck, Einsiedelstrasse 6,**
**D-2400 Lübeck 1 (DE)**

(72) Erfinder: **Bertling, Toni, Dipl.-Phys. Dr.-Ing.,**
**Anderlohrstrasse 16, D-8520 Erlangen (DE)**
Erfinder: **Behrendt, Volkmar, Ing.(grad),**
**Klaus-Groth-Strasse 5a, D-2407 Schwartau (DE)**

(74) Vertreter: **Mehl, Ernst, Dipl.-Ing., Postfach 22 01 76,**
**D-8000 München 22 (DE)**

Regelung für Drehwerks- oder Hubwerksantrieb eines Krans

Die Erfindung bezieht sich auf eine Regelung für Drehwerks- oder Hubwerksantriebe eines Krans, insbesondere für Schiffe, bei dem am Ende eines um ein Drehgelenk drehbaren Innenholms ein um ein Drehgelenk drehbarer Aussenholm mit einem Ladegeschirr angeordnet ist, wobei die Antriebe des Innenholms und des Aussenholms mit je einer Drehwinkelregeleinrichtung ausgerüstet sind, die zur Vorgabe des Drehwinkels des Innenholms gegenüber einer Bezugslinie und des Drehwinkels des Aussenholms gegenüber dem Innenholm einen mit einem Steuerhebel versehenen Sollwertgeber besitzt, dessen Ausgangssignale zur Einstellung des Drehwinkels des Innenholms gegenüber der Bezugslinie dem Regler für den Drehwerksantrieb zugeführt werden, wobei als Sollwertformer für den Drehwinkel des Aussenholms gegenüber dem Innenholm ein Funktionsgenerator dient.

Eine Regelung dieser Art für eine Greifvorrichtung ist aus der FR-A-2065598 bekannt. Hierbei sind drei um Gelenke drehbare Holme vorgesehen, wobei das Ende des äusseren Holms ein Werkzeug oder andere Geräte, wie z. B. eine Reinigungsbürste, einen Greifmechanismus oder dergleichen trägt. Zur Einstellung des Drehwinkels des Innenholms gegenüber einer Bezugslinie dient ein mit einem Steuerhebel versehener Sollwertgeber, dessen Ausgangssignal der Regeleinrichtung für den Antrieb des Innenholms vorgegeben wird. Ein der jeweiligen Winkelstellung des Innenholms gegenüber dem Aussenholm entsprechendes Istwert-Signal wird einem Signalprozessor zur Errechnung der Winkelwerte zwischen Innenholm und Aussenholm und zwischen Aussenholm und Endarm zugeführt. Hierbei verbleibt eine Abweichung zwischen Sollstellung und Iststellung des Innenholms, die als Fehler bei der Sollwertbildung des Winkels zwischen Innenholm und Aussenholm und zwischen Aussenholm und Endarm im Prozessrechner mit eingeht, so dass mit Fehler behaftete Sollwerte gebildet werden.

Zu Beginn des Transportvorganges werden bei der bekannten Vorrichtung Startwinkel eingegeben, die abhängig sind von den Positionswinkeln des Startpunktes. Damit gehen zwar die Parameter für den weiter gewünschten Transportweg, wie z. B. der senkrechte Abstand des Transportweges von dem inneren Drehgelenk des Innenholms und die Länge der Holme in die weitere Berechnung des Bewegungsablaufes mit ein, aber nur mit der Genauigkeit, wie bei einem Produkt, z. B. $b \cdot \sin \gamma_0$, die Bestimmung der einzelnen Faktoren möglich ist. Ferner wird zur Festlegung der Winkelsollwerte für den Aussenlenker und Endarm ein Lösungsverfahren von simultanen Gleichungen angewendet, die nur Näherungslösungen für die Sollwertwinkelbildung zulassen.

Es ist daher in Frage gestellt, ob mit der bekannten Vorrichtung ein auf einer geradlinigen Bahn anzusteuerndes Ziel hinreichend genau erreicht werden kann.

Aufgabe der Erfindung ist es, eine Regelung anzugeben, die es ermöglicht, eine Last von einem Aufnahmepunkt zu einem Absetzpunkt entlang einer vorgegebenen Kurve, insbesondere einer Geraden, unter Vermeidung der Nachteile der bekannten Ausführung zu bewegen.

Diese Aufgabe wird bei einer Regelung der eingangs genannten Art erfindungsgemäss dadurch gelöst, dass dem Funktionsgenerator das Ausgangssignal des Sollwertgebers zugeführt wird, und dass der Funktionsgenerator mit einem mit einem Stellhebel oder einer elektrischen Nachlaufschaltung versehenen Rechenbaustein ausgerüstet ist, der zur Einstellung von durch den Abstand des Transportweges von dem inneren Drehgelenk des Innenholms und der Länge des Innen- und Aussenholms definierten Parameterwerten dient.

Auf diese Weise kann man innerhalb des Aktionskreises des Krans durch Steuerung der Drehbewegungen des Innen- und Aussenholms in der Horizontalen beliebige Transportwege und damit eine Verkürzung der Transportzeit erzielen, da eine Fehlerkorrektur am Absetzpunkt entfällt.

In der Zeichnung ist ein Ausführungsbeispiel der Erfindung dargestellt:

Fig. 1 zeigt eine schematische Seitenansicht eines Schiffskrans mit waagerechten Knicklenkern,

Fig. 2 eine Draufsicht zu Fig. 1,

Fig. 3 eine Regeleinrichtung für die Winkeleinstellung der Knicklenker des in den Figuren 1 und 2 gezeigten Krans,

Fig. 4 eine Prinzip-Darstellung der Schaltung des in Fig. 3 gezeigten Funktionsgenerators,

Fig. 5 eine Abhängigkeit der Drehwinkel des Innen- und Aussenholms vom Transportweg s und

Fig. 6 eine Einrichtung zur Erzielung einer vorgebbaren, insbesondere konstanten Transportgeschwindigkeit.

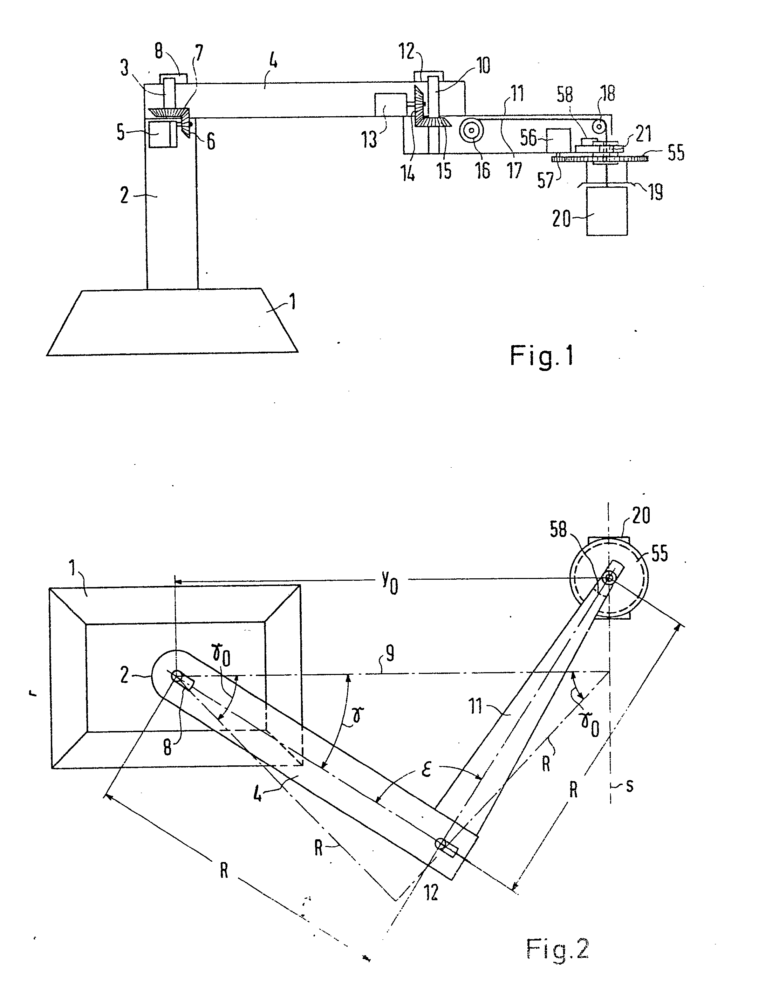

In Fig. 1 ist auf einer Konsole 1 eine Säule 2 angeordnet, an der an einem festen senkrechten Drehzapfen eines Drehgelenks 3 das eine Ende eines Innenholms 4 drehbar gelagert ist. Zum Drehen des Innenholms 4 dient ein Drehwerksantrieb, der aus einem Motor 5 und einem Getriebe mit Ritzel 6 sowie Zahnkranz 7 besteht. Ein Winkelgeber 8 dient zum Erfassen des Drehwinkels $\gamma$, den der Innenholm 4 gegenüber einer Bezugslinie 9 (Fig. 2) einnimmt. Am anderen Ende des Innenholms 4 ist ein weiteres Drehgelenk 10 für einen Aussenholm 11 mit einem weiteren Winkelgeber 12 angeordnet, der den Winkel $\varepsilon$ zwischen dem Innenholm 4 und dem Aussenholm 11 erfasst. Zum Drehen des Aussenholms 11 gegenüber Innenholm 4 dient ein weiterer Drehwerksantrieb, der aus einem Motor 13 und Getriebe mit Ritzel 14 und Zahnkranz 15 besteht. Im Aussenholm 11 ist eine durch einen Motor angetriebene Winde 16 angeordnet, dessen Seil 17 über eine Laufrolle 18 am freien Ende des Aussenholms 11 ein Ladegeschirr 19 für die Aufnahme einer Last 20 trägt.

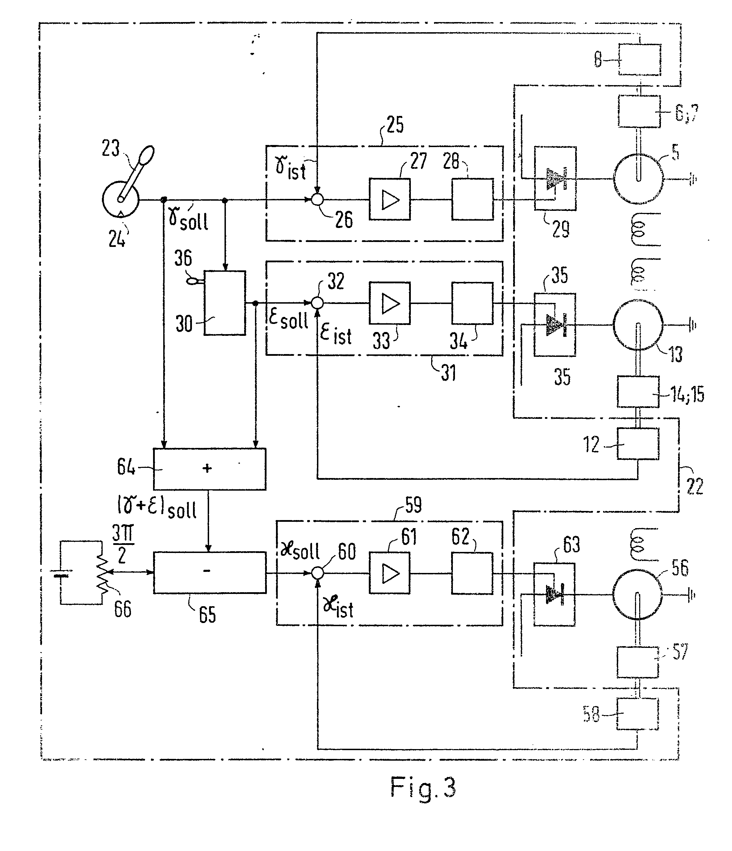

Die beiden Drehwerksantriebe 5, 6, 7 und 13, 14, 15 sind – wie Fig. 3 zeigt – mit einer Drehwinkelregeleinrichtung 22 ausgerüstet, die zur Vorgabe des Drehwinkels $\gamma$ des Innenholms 4 gegenüber der Bezugslinie 9 einen mit einem Steuerhebel 23 versehenen Sollwertgeber 24 besitzt, dessen Ausgangssignal $\gamma_{soll}$ zur Einstellung des Drehwinkels $\gamma$ des Innenholms 4 einem Regler 25 für den Drehwerksantrieb 5, 6, 7 des Innenholms zugeführt ist. Dieser Regler 25 besitzt einen Soll-Istwertvergleicher 26, einen Regelverstärker 27 und einen Steuersatz 28 für ein im Ankerkreis des Motors 5 angeordnetes elektronisches Stellglied 29. Der mit dem Motor 5 in Verbindung stehende Winkelgeber 8 liefert ein Signal, das als Istwert $\gamma_{ist}$ dem Soll-Istwertvergleicher 26 zugeführt wird.

Andererseits wird das Ausgangssignal $\gamma_{soll}$ des Sollwertgebers 24 zur Einstellung des Winkels $\varepsilon$ des Aussenholms gegenüber dem Innenholm einem Funktionsgenerator 30 zum Bilden eines vom Drehwinkel $\gamma$ und Verlauf des Transportweges s abhängigen Winkelsollwertes $\varepsilon_{soll}$ zugeführt, der zur Vorgabe des Winkels $\varepsilon$ zwischen Innenholm 4 und Aussenholm 11 einem Regler 31 für den Drehwerksantrieb 13, 14, 15 des Aussenholms zugeführt ist. Der Regler 31 besitzt einen Soll-Istwertvergleicher 32, einen Regelverstärker 33 und einen Steuersatz 34 für ein im Ankerkreis des Motors 13 angeordnetes elektronisches Stellglied 35. Der mit dem Motor 13 verbundene weitere Winkelgeber 12 liefert den Istwert $\varepsilon_{ist}$, der dem Soll-Istwertvergleicher 32 zugeführt wird.

Mit dem Sollwertgeber 24 wird vom Kranführer der Drehwinkel des Innenholms als Sollwert vorgegeben. Abhängig von diesem Drehwinkel $\gamma$ wird im Funktionsgenerator 30 für den Drehwerksantrieb des Aussenholms 11 ein Sollwert $\varepsilon_{soll}$ von solcher Grösse gebildet, dass das Ladegeschirr 19 mit der Last 20 auf einem vorgegebenen Transportweg bewegt wird. Hierzu ist der Funktionsgenerator 30 derart ausgebildet, dass sein Ausgangssignal nach der mathematischen Beziehung

$$\varepsilon_{soll} = f\left(\gamma_{soll}, y_0\right) \qquad (1)$$

vom Eingangssignal $\gamma_{soll}$ abhängt. Dabei ist $y_0$ ein Parameter des Transportweges von der inneren Drehachse des Innenholms 4.

Für einen geradlinigen Transportweg gilt:

$$\varepsilon_{soll} = \arccos \left[\sin \gamma_{soll} \right.$$
$$\sqrt{1-(\frac{y_0}{R}-\cos \gamma_{soll})^2}-$$
$$\left. \cos \gamma_{soll} \left(\frac{y_0}{R}-\cos \gamma_{soll}\right)\right] \qquad (2)$$

Darin bedeutet R die Länge des Innenholms 4, die im vorliegenden Fall gleich der Länge des Aussenholms 11 ist. Für einen vorgegebenen Kran ist die Grösse R eine Konstante. Der Wert $y_0$ kann für jeden gewünschten Transportweg zu Beginn der Ladetätigkeit in den Funktionsgenerator 30 über eine Eingabevorrichtung mit einem Stellhebel 36 eingegeben werden; er ist hier der senkrechte Abstand des Transportweges s von der inneren Drehachse des Innenholms 4.

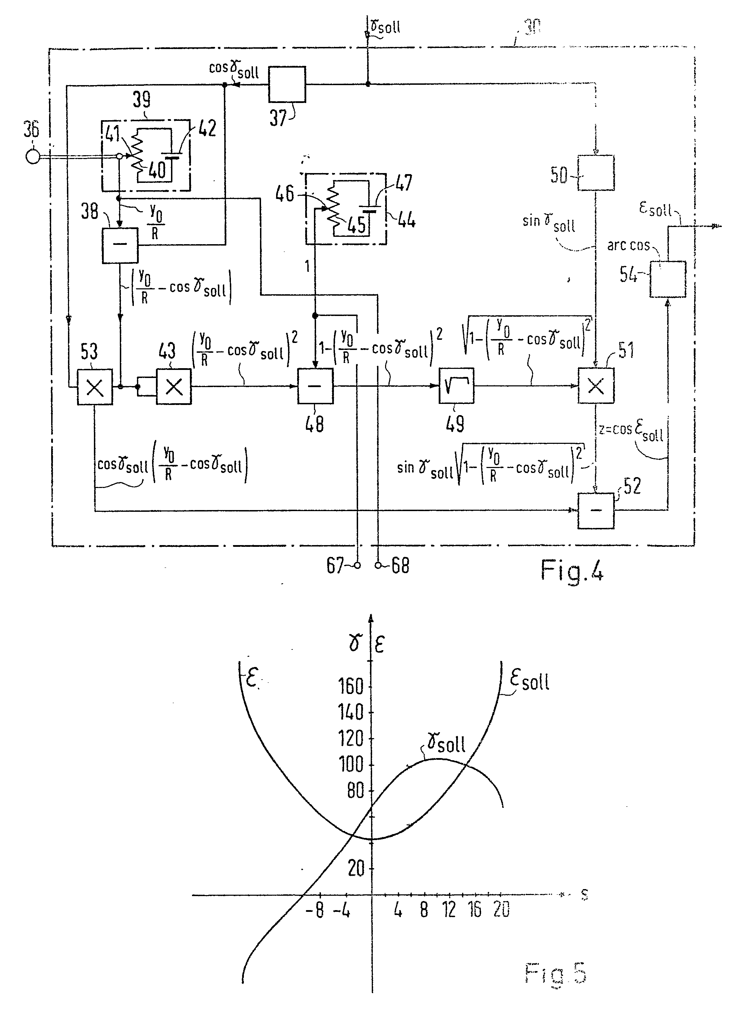

Wie Fig. 4 zeigt, befinden sich im Funktionsgenerator 30 zur Berechnung des Sollwertes $\varepsilon_{soll}$ entsprechend der oben angegebenen Beziehung (2) mehrere Rechnerbausteine. Der am Eingang des Funktionsgenerators anstehende Sollwert $\gamma_{soll}$ wird einem Cosinus-Bildner 37 zugeführt und dessen Ausgangssignal $\cos \gamma_{soll}$ im Subtrahierer 38 von dem im Rechner-Baustein 39 gebildeten Signalwert $\frac{y_0}{R}$ subtrahiert. Im einfachsten Fall ist der Rechner-Baustein 39 ein Potentiometer 40 mit Abgriff 41, das an einer Batterie 42 liegt. Der Abgriff ist mit dem Stellhebel 36 verbunden. Das Ausgangssignal $\frac{y_0}{R} - \cos \gamma_{soll}$ des Subtrahierers 38 wird in einem Multiplizierer 43 quadriert. In einem Konstantwertbildner 44, der im einfachsten Fall durch ein Potentiometer 45 mit Abgriff 46 gebildet ist, welches an einer Batterie 47 liegt, wird der Wert 1 gebildet, wobei das maximale Ausgangssignal des Cosinus-Bildners 37 identisch eingestellt wird mit dem Ausgangswert des Konstantwertbildners 44. Im Subtrahierer 48 wird vom Konstantwert 1 des Konstantwertbildners 44 der Ausgangswert des Multiplizierers 43 abgezogen. Das Ausgangssignal des Subtrahierers 48 wird dem Radizierer 49 zugeführt, dessen Ausgangssignal im Multiplizierer 51 mit dem Ausgangssignal des Sinus-Bildners 50 für den Wert $\gamma_{soll}$ multipliziert wird. Der so gebildete Wert wird einem Eingang eines Subtrahierers 52 zugeführt. Der andere Eingang des Subtrahierers 52 ist mit dem Ausgang eines weiteren Multiplizierers 53 verbunden, dessen Eingänge einerseits an den Ausgang des Cosinus-Bildners 37 und an den Ausgang des Subtrahierers 38 angeschlossen sind. Der Ausgang des Subtrahierers 52 liefert das Signal $\cos \varepsilon_{soll}$, welches im Baustein 54 invertiert wird, d. h. es wird der $\arccos$ von $\cos \varepsilon_{soll}$ und damit $\varepsilon_{soll}$ gebildet.

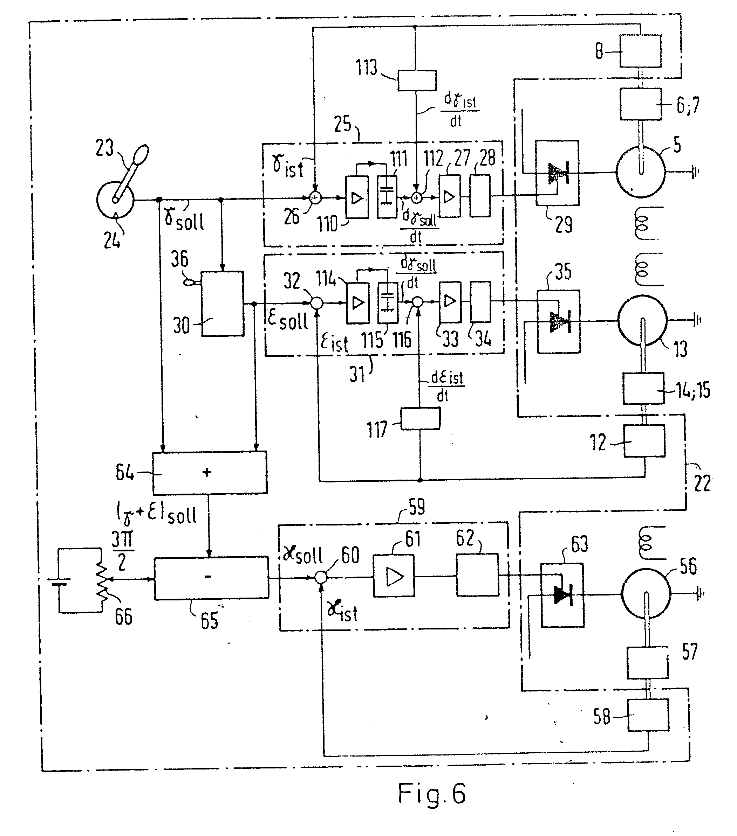

Für einen geradlinigen Transportweg und vorgegebene Werte $y_0$ und R ergibt sich die in Fig. 5 dargestellte Zuordnung von $\gamma_{soll}$ und $\varepsilon_{soll}$.

Zu Beginn eines Transportvorganges stellt der Kranführer den Kran durch Verstellen des Steuerhebels 23 (Fig. 3) so ein, dass das entlang des einzuhaltenden Transportweges s bewegte Ende des Aussenholms 11 im Schnittpunkt mit der Bezugslinie 9 liegt (gestrichelte Stellung in Fig. 2). Je nach Grösse des sich dabei ergebenden Startwinkels $\gamma_0$ ist dann der senkrechte Abstand $y_0$ des Transportweges von der Achse des festen Drehgelenks 3 des Innenholms 4 festgelegt. Dieser Wert $y_0$ kann von Hand mit dem Stellhebel 36 (Fig. 4) oder über eine elektrische Nachlaufschaltung abhängig vom Startwinkel $\gamma_0$ nach der Beziehung

$$y_0 = 2R \cos \gamma_0 \qquad (3)$$

automatisch in den Funktionsgenerator 30 eingegeben werden. Hierzu braucht lediglich der am Ausgang des Winkelgebers 8 in der Startposition anstehende Signalwert über eine Rechenschaltung und eine Nachlaufschaltung mit Stellmotor zur Verstellung des Potentiometerabgriffs 41 herangezogen zu werden. Nach der Einstellung des Abgriffs 41 des Potentiometers 40 bleibt der am Potentiometer eingestellte Wert für sich wiederholende Transportvorgänge erhalten.

Der Kranführer fährt durch Betätigen des Steuerhebels 23 (Fig. 3) das Ladegut vom Aufnahmepunkt zum Absetzpunkt entlang einer Geraden.

Ist am Ende des Aussenholms 11 für das Ladegeschirr 19 eine Drehscheibe 55 mit Drehwerksantrieb 56, 57, 58 angeordnet (Fig. 2), so ist es vorteilhaft, den Winkel $\varkappa$ der mit einem Drehgelenk 21 versehenen Drehscheibe 55 zur Linie s abhängig vom Drehwinkel $\gamma$ und dem Winkel $\varepsilon$ zwischen Innenholm und Aussenholm nach der Beziehung

$$\varkappa_{soll} = \frac{3\pi}{2} - (\gamma_{soll} + \varepsilon_{soll}) \qquad (4)$$

derart zu steuern, dass die Last 20 entlang des Transportweges s parallel zu ihrer Achse verschoben wird. Dadurch kann ein Stapelvorgang zeit- und personalsparend durchgeführt werden. Dies ist insbesondere bei automatischem Transportbetrieb, insbesondere bei Verladung durch eine Schiffsluke von Vorteil, da z. B. Container ihre parallele Lage zur Schiffslängsachse in jeder Position des Transportweges beibehalten.

Der Drehwerksantrieb für die Drehscheibe 55, bestehend aus Motor 56, Getriebe 57 und Winkelgeber 58 (Fig. 1 und 3) ist mit einem Regler 59 ausgerüstet, der einen Soll-Istwertvergleicher 60, einen Regelverstärker 61 und einen Steuersatz 62 enthält, welcher ein elektronisches Stellglied 63 für den Ankerstrom des Drehwerksmotors 56 beaufschlagt.

Der Sollwert $\varkappa_{soll}$ wird in einem Addierer 64 und einem Subtrahierer 65 gebildet. Gemäss der mathematischen Beziehung (4) wird der Addierer 64 von den Sollwerten $\gamma_{soll}$ und $\varepsilon_{soll}$ gespeist und der Subtrahierer 65 von einem Potentiometer 66, in dem der konstante Signalwert $\frac{3\pi}{2}$ gebildet wird.

Es ist zweckmässig, der Drehwinkelregelung eine Geschwindigkeitsregelung derart zu unterlagern, dass eine vorgebbare Transportgeschwindigkeit, insbesondere eine ausserhalb des Anfahr- und Bremsbereiches zumindest annähernd konstante Transportgeschwindigkeit eingehalten wird.

Hierzu sind – wie Fig. 6 zeigt – im Regler 25 für den Drehwerksantrieb 5, 6, 7 des Innenholms 4 zwischen dem Soll-Istwertvergleicher 26 und dem Regelverstärker 27 ein Verstärker 110 mit nachgeordnetem Differenzierglied 111 und ein weiterer Soll-Istwertvergleicher 112 angeordnet. Im Differenzierglied 111 wird der Winkelsollwert $\gamma_{soll}$ differenziert und als Winkelgeschwindigkeitssollwert $\frac{d\,\gamma_{soll}}{dt}$ im Soll-Istwertvergleicher 112 mit dem in der Differenziereinrichtung 113 gebildeten Winkelgeschwindigkeits-Istwert $\frac{d\,\gamma_{ist}}{dt}$ verglichen. Der Differenzwert wird dem Regelverstärker 27 zugeführt.

Ferner werden im Regler 31 für den Drehwerksantrieb 13, 14, 15 des Aussenholms 11 zwischen dem Soll-Istwertvergleicher 32 und dem Regelverstärker 33 ein Verstärker 114 mit nachgeordnetem Differenzierglied 115 und ein weiterer Soll-Istwertvergleicher 116 angeordnet. Im Differenzierglied 115 wird der Winkelsollwert $\varepsilon_{soll}$ differenziert und als Winkelgeschwindigkeitssollwert $\frac{d\,\varepsilon_{soll}}{dt}$ im Soll-Istwert-Vergleicher 116 mit dem in der Differenziereinrichtung 117 gebildeten Winkelgeschwindigkeits-Istwert $\frac{d\,\varepsilon_{ist}}{dt}$ verglichen. Der Differenzwert wird dem Regelverstärker 33 zugeführt.

Durch die dabei erzielte zumindest annähernd konstante Transportgeschwindigkeit kann bei einem frei wählbaren Transportweg eine optimale Umschlagleistung erzielt werden.

## Patentansprüche

1. Regelung für Drehwerks- oder Hubwerksantriebe eines Krans, insbesondere für Schiffe, bei dem am Ende eines um ein Drehgelenk (3) drehbaren Innenholms (4) ein um ein Drehgelenk (10) drehbarer Aussenholm (11) mit einem Ladegeschirr (19) angeordnet ist, wobei die Antriebe (5, 13) des Innenholms (4) und des Aussenholms (11) mit je einer Drehwinkelregeleinrichtung (25; 31) ausgerüstet sind, die zur Vorgabe des Drehwinkels ($\gamma$) des Innenholms (4) gegenüber einer Bezugslinie (9) und des Drehwinkels ($\varepsilon$) des Aussenholms (11) gegenüber dem Innenholm (4) einen mit einem Steuerhebel (23) versehenen Sollwertgeber (24) besitzt, dessen Ausgangssignale zur Einstellung des Drehwinkels ($\gamma$) des Innenholms (4) gegenüber der Bezugslinie (9) dem Regler (25) für den Drehwerksantrieb (5) zugeführt werden, wobei als Sollwertformer für den Drehwinkel ($\varepsilon_{soll}$) des Aussenholms (11) gegenüber dem Innenholm (4) ein Funktionsgenerator (30) dient, dadurch gekennzeichnet, dass dem Funktionsgenerator (30) das Ausgangssignal ($\gamma_{soll}$) des Sollwertgebers (24) zugeführt wird, und dass der Funktionsgenerator (30) mit einem mit einem Stellhebel (36) oder einer elektrischen Nachlaufschaltung versehenen Rechenbaustein (39) ausgerüstet ist, der zur Einstellung von durch den Abstand des Transportweges (s) von dem inneren Drehgelenk (3) des Innenholms (4) und der Länge des Innen- und Aussenholms definierten Parameterwerten ($\frac{y_0}{R}$) dient.

2. Regelung nach Anspruch 1, dadurch gekennzeichnet, dass der Funktionsgenerator (30) mit Rechenbausteinen (37 bis 39, 43, 44 und 48 bis 53) zur Lösung der mathematischen Beziehung für einen geradlinigen Transportweg

$$\varepsilon_{soll} = \arccos\left[\sin\gamma_{soll} \sqrt{1-(\frac{y_0}{R}-\cos\gamma_{soll})^2} - \cos\gamma_{soll}\,(\frac{y_0}{R}-\cos\gamma_{soll})\right],$$

ausgerüstet ist, bei dem sich die Parameterwerte (γ) auf $\frac{y_0}{R}$ reduzieren.

3. Regelung nach einem der vorhergehenden Ansprüche, dadurch gekennzeichnet, dass der Drehwinkelregelung eine Geschwindigkeitsregelung derart unterlagert ist, dass eine vorgebbare Transportgeschwindigkeit, insbesondere eine ausserhalb des Anfahr- und Bremsbereiches zumindest annähernd konstante Transportgeschwindigkeit eingehalten wird.

## Claims

1. Regulation means for slewing or lifting gear drives of a crane, in particular for ships, wherein at the end of an inner crossbeam (4) rotatable about a swivel (3) there is arranged an outer crossbeam (11) rotatable about a swivel (10) having a loading gear (19), where the drives (5, 13) of the inner crossbeam (4) and of the outer crossbeam (11) are respectively equipped with an angle of rotation regulating device (25; 31), which device possesses a theoretical value generator (24) having a control lever (23) to set the angle of rotation (γ) of the inner crossbeam (4) in relation to a reference line (9) and the angle of rotation (ε) of the outer crossbeam (11) in relation to the inner crossbeam (4), the generator output signals fed to the regulator (25) for the slewing gear drive (5) in order to adjust the angle of rotation (γ) of the inner crossbeam (4) in relation to the reference line (9), where a function generator (30) serves as a theoretical value former for the angle of rotation ($\varepsilon_{soll}$) of the outer crossbeam (11) in relation to the inner crossbeam (4), characterised in that the function generator (30) is supplied with the output signal ($\gamma_{soll}$) of the theoretical value generator (24), and that the function generator (30) is equipped with a computing module (39) provided with an adjusting lever (36) or an electric follow-up circuit, which serves to adjust parameter values ($y_0/R$) defined by the distance of the transportation path (s) from the inner swivel (3) of the inner crossbeam (4) and the length of the inner and outert crossbeam.

2. Regulation means as claimed in Claim 1, characterised in that the function generator (30) is equipped with computing modules (37 to 39, 43, 44 and 48 to 53) for the solution of the mathematical equation for a straightline transportation path:

$$\varepsilon_{soll} = \text{arc cos} \left[ \sin \gamma_{soll} \sqrt{1-(\frac{y_0}{R}-\cos \gamma_{soll})^2} - \cos \gamma_{soll} (\frac{y_0}{R}-\cos \gamma_{soll}) \right],$$

wherein the parameter values (γ) are reduced to $y_0/R$.

3. Regulation means as claimed in one of the preceding Claims, characterised in that the speed regulation is subordinated to the regulation of the angle of rotation in a manner to maintain a predeterminable transportation speed, in particular a transportation speed, at least approximately constant outside the starting and braking range.

## Revendications

1. Système de régulation pour des mécanismes d'entraînement en rotation ou des mécanismes d'entraînement de levage d'une grue, notamment pour des navires, dans lequel le bras extérieur (11), pouvant tourner autour d'une articulation pivotante (10) et portant un dispositif de levage (19) est disposé sur l'extrémité d'un bras intérieur (4) pouvant tourner autour d'une articulation pivotante (3), les mécanismes d'entraînement (5, 13) du bras intérieur (4) et du bras extérieur (11) étant équipés d'un dispositif respectif de régulation de l'angle de rotation (25; 31) qui possède, pour la prédétermination de l'angle de rotation (γ) du bras intérieur (4) par rapport à une droite de référence (9), et de l'angle de rotation (γ) du bras extérieur (11) par rapport au bras intérieur (4), un générateur de valeurs de consigne (24) équipé d'un levier de commande (23) et dont les signaux de sortie sont envoyés, pour le réglage de l'angle de rotation (ε) du bras intérieur (4) par rapport à la droite de référence (9), au régulateur (25) du mécanisme d'entraînement en rotation (5), un générateur de fonction (30) étant utilisé en tant que dispositif de formation de la valeur de consigne de l'angle de rotation ($\varepsilon_{consigne}$) du bras extérieur (11) par rapport au bras intérieur (4), caractérisé par le fait que le signal de sortie ($\gamma_{consigne}$) du générateur de valeurs de consigne (24) est envoyé au générateur de fonction (30) et que le générateur de fonction (30) est équipé d'un module de calcul (39) équipé d'un levier de réglage (36) ou d'un circuit d'asservissement électrique, qui sert au réglage de valeurs de paramètres ($y_0/R$), définies par la distance de la trajectoire de déplacement (s) par rapport à l'articulation pivotante intérieure (3) du bras intérieur (4), et par la longeur du bras intérieur et du bras extérieur.

2. Système de régulation suivant la revendication 1, caractérisé par le fait que le générateur de fonction (30) est équipé de modules de calcul (37 à 39, 43, 44 et 48 à 53) servant à résoudre la relation mathématique pour une trajectoire rectiligne de déplacement

$$\varepsilon_{consigne} = \text{arc cos} \left[ \sin \gamma_{consigne} \sqrt{1-(\frac{y_0}{R}-\cos \gamma_{consigne})^2} - \cos \gamma_{consigne} (\frac{y_0}{R}-\cos \gamma_{consigne}) \right],$$

dans laquelle les valeurs des paramètres (γ) se réduisent à $y_0/R$.

3. Système de régulation suivant l'une des revendications précédentes, caractérisé par le fait qu'une régulation de vitesse est asservie à la régulation de l'angle de rotation de telle manière qu'une vitesse de déplacement pouvant être réglée, en particulier vitesse de déplacement au moins approximativement constante à l'extérieur de la plage de démarrage et de la plage de freinage, est respectée.

Fig.1

Fig.2

Fig. 3

Fig.4

Fig 5

Fig.6